# EUROPEAN PATENT APPLICATION

(11) **EP 1 825 997 A2**
(43) Date of publication of application: **29.08.2007**
(21) Application number: 07101323.9
(22) Date of filing: 29.01.2007
(51) Int. Cl.: B32B 27/08

(54) **Dimensionally stable packaging film and articles made therefrom**

(30) Priority: 24.02.2006 US 360836
(71) Applicant: Curwood, Inc., Oshkosh, WI 54903 (US)
(72) Inventor: Lischefski, Andrew John, 33100, Tampere (FI); Cruz, Tara Kay, Appleton, WI WI 54914 (US); Nelson, Kevin Philip, Appleton, WI 54914 (US)
(74) Representative: Eddowes, Simon

(57) **Abstract**

The present invention relates to flexible packaging films being dimensionally stable when prepared with a plurality of thermoplastic polymeric layers including a first layer comprising a polymer or copolymer having a glass transition temperature of greater than 50° C., a second layer comprising an oxygen barrier material or an adhesive material, and positioned between the first and third layers, and a third layer comprising at least 30% by weight relative to the total weight of said layer of a polymer or copolymer having a glass transition temperature of greater than 50° C. The flexible curl-resistant films according to the present invention also provide packages formed therefrom.

## Description

### BACKGROUND OF THE INVENTION

The present invention generally relates to multilayer packaging films, including sheets, laminates, and other articles comprising at least three polymer layers which reduce or substantially eliminate the tendency of a flexible film to curl, and further relates to methods of producing packages, containers and other like articles formed from such multilayer packaging films.

Multilayer films, sheets and laminates have numerous applications in industry, particularly for packaging applications. Kirk-Othmer Encyclopedia of Chemical Technology, Third edition, Volume 10, page 216 (19100), Wiley-Interscience Publication, John Wiley & Sons, New York, details generally the materials and processes required for making such articles as well as their applications. Another article of interest, for example, is "Films, Multilayer," by W. Schrenk and E. Veazey, Encyclopedia of Polymer Science and Engineering, Vol. 7, 106 (19100). Generally, such articles are prepared by processing individual polymers or a combination of polymers in extrusion operations or by laminating individually formed layers together or by a combination of these processes. Processing as discussed herein refers to forming and/or subsequently processing one or more thermoplastic layers of polymeric material involving heat and/or pressure. In general, packaging films may have predetermined layer compositions and layer arrangements in order to provide desired film properties. Desired properties in the packaging films, sheets, laminates, and the like, depend on the intended applications but generally may include good mechanical properties such as tensile and impact strengths, processability, thermoformability, tear resistance, gas barrier properties, moisture barrier properties, optical properties, thermal and dimensional stability and the like. Dimensional stability is particularly desirable in flexible packaging film for subsequent manufacturing processes such as slitting, winding, printing, and filling operations, and many end uses such as packages, pouches, bags and the like. Abstinence of dimensional stability may lead to serious curling problems with the film and/or end product.

Accordingly, the need exists to provide flexible films suitable for packaging applications which exhibit reduced curl which include multiple layers of thermoplastic materials, packages formed from these films and methods of manufacturing packages with curl control.

### SUMMARY OF THE DISCLOSURE

It has been discovered that flexible packaging films may be dimensionally stable when prepared with a plurality of thermoplastic polymeric layers including a first layer comprising a polymer or copolymer having a glass transition temperature of greater than 50° C., a second layer comprising an oxygen barrier material or an adhesive material, and positioned between the first and third layers, and a third layer comprising a polymer or copolymer having a glass transition temperature of greater than 50° C. The flexible curl-resistant films according to the present invention also provide packages formed therefrom.

As a first aspect, the present disclosure is directed to flexible curl-resistant packaging films comprising a plurality of thermoplastic polymer layers which include at least a first layer, a second layer, and a third layer and have a layer arrangement such that the second layer is disposed between the first and third layers. The first and third layers each comprise a polymer or copolymer having a glass transition temperature of greater than 50° C. and may not be restricted to any one particular polymer or blend thereof which has a glass transition temperature of greater than 50° C. Alternatively, first layer may comprise a crystalline polymer or copolymer having a glass transition temperature of greater than 50° C. and may not be restricted to any one particular crystalline polymer or blend thereof having a glass transition temperature of greater than 50° C. First and third layers may each include a polymer or copolymer having a glass transition temperature of at least 80° C. or at least 100° C. Alternatively, first layer may comprise a crystalline polymer or copolymer which has a glass transition temperature of at least 80° C. or at least 100° C. Examples of polymers and copolymers having a glass transition temperature of greater than 50° C. include, but are not limited to, aromatic polyamide, aromatic polyester, cyclic olefin copolymer, polyamideimide, polycarbonate, polyetheretherketone, polyetherimide, polyethersulphone, polymethyl methacrylate, polyoxymethylene, polyphenylene sulphide, polystyrene, unplasticized polyvinyl chloride or blends thereof. Exemplary of polymers and copolymer having a glass transition temperature of at least 80° C. include, but is not limited to, aromatic polyamide, cyclic olefin copolymer, polyamideimide, polycarbonate, polyetheretherketone, polyetherimide, polyethersulphone, polymethyl methacrylate, polyoxymethylene, polyphenylene sulphide, polystyrene, unplasticized polyvinyl chloride or blends thereof. Examples of polymers and copolymers having a glass transition temperature of at least 100° C. include, but are not limited to, cyclic olefin copolymer, polyamideimide, polycarbonate, polyetheretherketone, polyetherimide, polyethersulphone, polymethyl methacrylate, polyoxymethylene, polyphenylene sulphide, polystyrene, or blends thereof. The second layer includes a polymeric oxygen barrier material or an adhesive material. The second layer may comprise a polymeric oxygen barrier material such that the film exhibits an oxygen transmission rate of between 0-2.0 cc/100 in²/24 hours at 23° C. The second layer may include a polymeric oxygen barrier material selected from the group consisting of ethylene/vinyl alcohol copolymer, aromatic polyamide or blends thereof. Alternatively, the second layer may include a crystalline polymeric oxygen barrier selected from the group consisting of ethylene/vinyl alcohol copolymer, aromatic polyamide or blends thereof. The third layer may include at least 30% by weight relative to the total weight of this layer of a polymer and copolymer having a glass transition temperature of greater than 50° C. Films of the present invention may exhibit a heat shrinkage value of less than 5% in both the machine and transverse directions at 90° C. and may further exhibit a degree of vertical curvature of less than 90° in the negative or positive direction relative to the plane of the film when measured according to the Standard Test Method for Curl, described hereinbelow, when the film is in a lay flat condition. The plurality of thermoplastic polymeric layers of the present invention may further comprise additional layers.

In a second aspect, the present invention provides packages formed from a flexible curl-resistant film as set forth above in connection with the first or second aspect of the present invention.

### BRIEF DESCRIPTION OF THE DRAWINGS

**FIG. 1** shows a diagrammatic cross-sectional view of one embodiment of the present invention having a plurality of polymeric layers comprising at least three layers.

**FIG. 2** shows a diagrammatic cross-sectional view of one embodiment of the present invention having a plurality of polymeric layers comprising seven layers.

**FIG. 3** shows a diagrammatic cross-sectional view of one embodiment of the present invention having a plurality of polymeric layers comprising nine layers.

### DETAILED DESCRIPTION OF THE DISCLOSURE

As used herein, the term "film" is use in the generic to include plastic web, regardless of whether it is a film or sheet.

As used herein, the term "thermoplastic" refers to a polymer or polymer mixture that softens when exposed to heat and then returns to its original condition when cooled to room temperature. In general, thermoplastic materials include, but are not limited to, synthetic polymers such as polyolefins, polyesters, polyamides, polystyrenes, and the like. Thermoplastic materials may also include any synthetic polymer that is cross-linked by either radiation or chemical reaction during the manufacturing or post manufacturing process operation.

As used herein, the term "polymer" refers to a material which is the product of a polymerization or copolymerization reaction of natural, synthetic, or natural and synthetic monomers and/or comonomers, and is inclusive of homopolymers, copolymers, terpolymers, etc. In general, the layers of a film of the present invention may comprise a single polymer, a mixture of a single polymer and non-polymeric material, a combination of two or more polymer materials blended together, or a mixture of a blend of two or more polymer materials and non-polymeric material. It will be noted that many polymers may be synthesized by the mutual reaction of complementary monomers. It will also be noted that some polymers are obtained by the chemical modification of other polymers such that the structure of the macromolecules that constitute the resulting polymer can be thought of as having been formed by the homopolymerization of a hypothetical monomer.

As used herein, the term "copolymer" refers to a polymer product obtained by the polymerization reaction or copolymerization of at least two monomer species. Copolymer may also be referred to as bipolymers. The term "copolymer" is also inclusive of the polymerization reaction of three, four or more monomer species having reaction products referred to terpolymers, quaterpolymers, *etc.* As used herein, a copolymer identified in terms of a plurality of monomers, *e*.*g*., ethylene/propylene copolymer, refers to a copolymer in which either monomer may copolymerize in a higher weight or molar percent than the other monomer or monomers. It is appreciated by a person of ordinary skill in the art that the term "copolymer," as used herein, refers to those copolymers where the first listed comonomer is polymerized in a higher weight percent than the second listed comonomer.

The term "curl-resistant" as used with respect to the present invention refers to a dimensionally stable film having a degree of vertical curvature of less than 90° in the negative or positive direction relative to the plane of said film as measured in accordance with the Standard Test Method for Curl when said film is in a lay flat condition. The Standard Test Method for Curl as discussed herein refers to a method for determining the amount of curl in degrees in films of the present invention. This method is applicable to any thermoplastic film or laminate. In this test, a sample film was tested by placing the film on a flat surface and making two perpendicular intersecting cuts in a sample of the film, the cuts being at 45° to the machine direction of the film, with each bisecting the other. A metal cutting template having two perpendicular intersecting grooves, each groove being approximately eight inches in length, was used to form the cuts in the sample film. By positioning the metal cutting template midway between and parallel to two of the edges of the film, curl was assessed in both the machine and transverse film directions. After cutting, the cutting template was removed and the film was undisturbed for one minute. Four V-shaped areas of the film were exposed each having an apex formed by two adjacent cuts. A Curl Tester is placed in the direction to be tested with the 0° marked edge of the tester positioned at 1/16 inch from the apex of each V-shaped area. The degree of curl was then measured as the point where the apex aligned with the scale on the Curl Tester. The measurement at each apex of two opposing V-shaped areas at 180° from each other is considered to be along one film direction. The Curl Tester is commercially available from Reynolds & Company Machinery, Terre Haute, Indiana, U.S.A.

The phrase "crystalline" as discussed herein includes partially crystalline or semi-crystalline, and refers to a polymer and copolymer having at least partially a regular three-dimensional periodic arrangement of molecules or subunits of molecules extending over distances, which are large relative to atomic dimensions. However, regularity of structure exists on a local scale. See, "Physical States and Transitions," Principles of Polymer Systems, 3rd Ed., pp. 51-72 (Hemisphere Publishing Corporation, 1989). In particular, the term "crystalline" as used with respect to the present invention refers to a material recognized by one skilled in the art of differential scanning calorimetry (DSC) as having a measurable melting point of at least 0.5 calories/gram as measured by DSC using ASTM 3417-83. In contrast, amorphous polymers have no measurable melting point of at least 0.5 calories/gram as measured by DSC using ASTM 3417-83 test method, which is incorporated herein by reference. Moreover, it will be understood by one skilled in the art of polymer science that the morphology of a crystalline or semi-crystalline polymer or copolymer may include both crystalline and amorphous regions and the presence of some amount of amorphous region within the crystalline region is not incompatible with the definition of a crystalline polymer as set forth herein.

The phrase "glass transition temperature" as used herein means the temperature at which a polymer changes from an amorphous glassy state to a rubbery state, and in the transition region, various properties such as an elastic modulus, an expansion coefficient, a heat content, a refractive index, a dielectric constant, and so forth, are changed. The glass transition temperature can be measured from the change of these properties, but more definitely, this can be evaluated by a known method by using differential scanning calorimetry (DSC) or dynamic mechanical analysis (DMA). When measuring the glass transition temperature by the differential scanning calorimetry, the glass transition temperature can be determined by ASTM D-3417 test method. Alternatively, ASTM E-1640-04 test method may be used to determine the glass transition temperature by dynamic mechanical analysis, the disclosure of which is incorporated herein by reference.

As used herein, the term "adhesive" and the phrase "tie layer" each refer to a polymeric material serving a primary purpose or function of adhering two surfaces to one another, presumably the planar surfaces of two film layers. In the present invention, an adhesive adheres one film layer surface to another film layer surface or one area of a film layer surface to another area of the same film layer surface. The adhesive may comprise any polymer, copolymer or blend of polymers having a polar group thereon, or any other polymer, homopolymer, copolymer or blend of polymers including modified and unmodified polymers, *e.g*., grafted copolymers, which provide sufficient interlayer adhesion to adjacent layers comprising otherwise nonadhering polymers. Adhesive compositions of the present invention may include, but are not limited to, modified and unmodified polyolefins, preferably polyethylene, most preferably, ethylene/α-olefin copolymer, modified and unmodified acrylate resin, preferably selected from the group consisting of ethylene/methacrylate copolymer, ethylene/vinyl acrylate copolymer, ethylene/ethyl acrylate copolymer, ethylene/butyl acrylate copolymer, or blends thereof. Examples of suitable adhesive materials for use in the present invention may include, but are not limited to, those disclosed in U.S. Patent No. 6,964,816 to Schell et al. and U.S. Publication No. 20040170851 to Lischefski, which are both incorporated herein by reference in their entireties.

As used herein, the terms "coextruded" or "coextrusion" refer to the process of extruding two or more polymer materials through a single die with two or more orifices arranged so that the extrudates merge and weld together into a laminar structure before chilling, *i*.*e*., quenching. The films according to the present invention may be fabricated by any coextrusion method known to a person of ordinary skill in the art which may include, but is not limited to, for example, blown film coextrusion, slot cast coextrusion, and extrusion coating, preferably, slot cast and blown film. For example, the films of the present invention may be formed by combining different streams of melt-plastified polymers into a single structure by slot or flat cast or blown bubble coextrusion. The flat die or slot cast process includes extruding polymer streams through a flat or slot die onto a chilled roll and subsequently winding the film onto a core to form a roll of film for further processing. In the blown coextrusion process, streams of melt-plastified polymers are forced through an annular die having a central mandrel to form a tubular extrudate. The tubular extrudate may be expanded to a desired wall thickness by a volume of air or other gas entering the hollow interior of the extrudate via the mandrel, and then rapidly cooled or quenched by any of various methods known to those of skill in the art. Unless otherwise noted, the thermoplastic resins utilized in the present invention are generally commercially available in pellet form and, as generally recognized in the art, may be melt blended or mechanically mixed by well-known methods using commercially available equipment including tumblers, mixers or blenders. Also, if desired, well known additives such as processing aids, slip agents, antiblocking agents and pigments, and mixtures thereof may be incorporated into the film, by blending prior to extrusion. The resins and any additives are introduced to an extruder where the resins are melt plastified by heating and then transferred to an extrusion (or coextrusion) die for formation into a tube. Extruder and die temperatures will generally depend upon the particular resin or resin containing mixtures being processed and suitable temperature ranges for commercially available resins are generally known in the art, or are provided in technical bulletins made available by resin manufacturers. Processing temperatures may vary depending upon other processing parameters chosen. In the practice of this invention, it may be desirable to irradiate the entire film to cause crosslinking of at least one layer of the film to improve the abuse and/or puncture resistance and other physical characteristics of the film. Crosslinking is the predominant reaction which occurs on irradiation of many polymers and results in the formation of carbon-carbon bonds between polymer chains. Crosslinking may be accomplished, for example, by irradiation using high energy electrons, gamma-rays, beta particles and the like. The irradiation source can be any electron beam generator operating in a range of about 150-6000 kilovolts (6 megavolts) with a power output capable of supplying the desired dosage. The voltage can be adjusted to appropriate levels which may be for example 1-6 million volts or higher or lower. Many apparatus for irradiating films are known to those skilled in the art. The most preferred amount of radiation is dependent upon the film and its end use.

The phrase "heat shrinkage" as discussed herein is defined as the unrestrained heat shrink of a film determined at 90° C. for five seconds. In general, the heat shrinkage values are obtained for four test specimens by cutting each film sample to 10 cm in the machine direction by 10 cm in the transverse direction. Each specimen is completely immersed for 5 seconds in a 90° C. water bath (or other specified non-reactive liquid). The distance between the ends of the shrunken specimen is measured. The difference in the measured distance for the shrunken specimen and the original 10 cm is multiplied by ten to obtain the percent of shrinkage for the specimen for each direction. The machine direction shrinkage for the four specimens is averaged for the machine direction shrinkage value of the given film sample, and the transverse direction shrinkage for the four specimens is averaged for the transverse direction shrinkage value. Heat shrinkage values may be determined in accordance with ASTM D-2732-96 test method which is incorporated herein by reference.

As used herein, the phrase "exterior-film layer" as applied to a film of the present invention refers to any film layer having less than two of its principal surfaces directly adhered to another layer of the film. In contrast, the phrase "interior-film layer," refers to any film layer having both its principal surfaces directly adhered to another layer of the film.

As used herein, the phrase "direct contact with and bonded to" as applied to film layers of the present invention, defines a subject film layer having face-to-face contact to another film layer (presumably, over their entire planar surfaces).

The phrase "oxygen barrier material" as applied to film layers of the present invention, defines any polymeric material which reduces or minimizes the transmission of oxygen through the film. Oxygen transmission or permeation resistance of a film may be measured using the procedure described in ASTM D-3985 test method which is incorporated herein by reference. It is appreciated by a person of ordinary skill in the art that a desirable oxygen property is one which provides the film with an oxygen transmission rate of between 0-2.0 cc/100 in²/24 hours at 23° C. and 0% R.H.

As used herein, the term "aromatic" as applied to film layers of the present invention, refers to a polymer or copolymer having at least one benzene ring moiety or fused-benzene ring moiety within the repeating polymer unit, which includes, for example, those represented by anthracenyl and naphthalenyl chemical structures, and chemical derivates thereof, in the polymer repeating unit.

As used herein, the phrase "sealant material" refers to a polymeric film layer which is heat sealable to itself or a chemically similar thermoplastic material, *i*.*e*., be capable of fusion bonding by conventional indirect heating means which generate sufficient heat on at least one film contact surface for conduction to the contiguous film contact surface and formation of a bond interface therebetween without loss of the film integrity. Advantageously, the bond interface must be sufficiently thermally stable to prevent gas or liquid leakage there through. Suitable examples of sealants for the present invention may include, but are not limited to, polyolefins, including polyethylenes, polypropylenes, polybutylenes, ionomers, ethylene/α-olefin copolymers and the like.

As used herein, terminology employing a "/" with respect to the chemical identity of any copolymer, *e*.*g*., an ethylene/unsaturated ester copolymer, identifies the comonomers which are copolymerized to produce the copolymer.

As used herein, the term "polyester" refers to homopolymers, copolymers or terpolymers having an ester linkage between monomer units which may be formed, for example, by condensation polymerization reactions between a dicarboxylic acid and a diol. The ester linkage can be represented by the general formula: [R-C(O)O-R']ₙ where R and R' = the same or different alkyl group and may be generally formed from the polymerization of dicarboxylic acid and diol monomers containing both carboxylic acid and hydroxyl moieties. It will be understood that the term "alkyl" as used herein, may refer to aliphatic or aromatic (or aryl) structural moieties and combinations thereof. The dicarboxylic acid may be linear or aliphatic, *i.e*., lactic acid, oxalic acid, maleic acid, succinic acid, glutaric acid, adipic acid, pimelic acid, suberic acid, azelaic acid, sebacic acid, and the like; or may be aromatic or alkyl substituted aromatic, *i.e*., various isomers of phthalic acid, such as paraphthalic acid (or terephthalic acid), isophthalic acid and naphthalic acid. Specific examples of alkyl substituted aromatic acids include, but are not limited to, the various isomers of dimethylphthalic acid, such as dimethylisophthalic acid, dimethylorthophthalic acid, dimethylterephthalic acid, the various isomers of diethylphthalic acid, such as diethylisophthalic acid, diethylorthophthalic acid, the various isomers of dimethylnaphthalic acid, such as 2, 6-dimethylnaphthalic acid and 2, 5-dimethylnaphthalic acid, and the various isomers of diethylnaphthalic acid. The glycols may be straight-chained or branched. Specific examples a useful diol include, but not limited to, ethylene glycol, propylene glycol, trimethylene glycol, 1, 4-butane diol, neopentyl glycol, cyclohexane diol and the like. The polyalkyl terephthalates are aromatic esters having a benzene ring with ester linkages at the 1, 4-carbons of the benzene ring as compared to polyalkyl isophthalate, where two ester linkages are present at the 1, 3-carbons of the benzene ring. In contrast, polyalkyl naphthalate are aromatic esters having two fused benzene rings where the two ester linkages may be present at the 2, 3-carbons or the 1, 6-carbons.

As used herein, the terms "polyamide" and "nylon" refer to polymers or copolymers having an amide linkage between monomer units which may be formed by any method known to those skilled in the art. The amide linkage can be represented by the general formula: [R-C(O)N-R']ₙ where R and R' = the same or different alkyl group. Examples of nylon polymers include, but are not limited to, nylon 6 (polycaprolactam), nylon 11 (polyundecanolactam), nylon 12 (polyauryllactam), nylon 4,2 (polytetramethylene ethylenediamide), nylon 4,6 (polytetramethylene adipamide), nylon 6,6 (polyhexamethylene adipamide), nylon 6,9 (polyhexamethylene azelamide), nylon 6,10 (polyhexamethylene sebacamide), nylon 6,12 (polyhexamethylene dodecanediamide), nylon 7,7 (polyheptamethylene pimelamide), nylon 8,8 (polyoctamethylene suberamide), nylon 9,9 (polynonamethylene azelamide), nylon 10,9 (polydecamethylene azelamide), nylon 12,12 (polydodecamethylene dodecanediamide), and the like. Examples of nylon copolymers include, but are not limited to, nylon 6,6/6 copolymer (polyhexamethylene adipamide/caprolactam copolymer), nylon 6,6/9 copolymer (polyhexamethylene adipamide/azelaiamide copolymer), nylon 6/6,6 copolymer (polycaprolactam/hexamethylene adipamide copolymer), nylon 6,2/6,2 copolymer (polyhexamethylene ethylenediamide/hexamethylene ethylenediamide copolymer), nylon 6,6/6,9/6 copolymer (polyhexamethylene adipamide/hexamethylene azelaiamide/caprolactam copolymer), as well as other nylons which are not particularly delineated here. Exemplary of aromatic nylon polymers include, but are not limited to, nylon 4,I, nylon 6,I, nylon 6,6/6I copolymer, nylon 6,6/6T copolymer, nylon MXD6 (poly-m-xylylene adipamide), poly-p-xylylene adipamide, nylon 6I/6T copolymer, nylon 6T/6I copolymer, nylon MXDI, nylon 6/MXDT/I copolymer, nylon 6T (polyhexamethylene terephthalamide), nylon 12T (polydodecamethylene terephthalamide), nylon 66T, nylon 6-3-T (poly(trimethyl hexamethylene terephthalamide).

As used herein, the phrase "cyclic olefin copolymer" refers to copolymers having at least one norbornene structural moiety within the repeating backbone of the polymer. Exemplary of commercially available cyclic olefin copolymers include, but are not limited to, the **TOPAS**® family of resins which is supplied by Polyplastics (Celanese-Ticona), Tokyo, Japan.

As used herein, the term "polystyrene" refers to homopolymers and copolymers having at least one styrene monomer (benzene, *i*.*e*., C₆H₅, having an ethylene substituent) linkage within the repeating backbone of the polymer. The styrene linkage can be represented by the general formula: [(C₆R₅)CH₂CH₂]ₙ where R = H or an alkyl group. Polystyrene may be formed by any method known to those skilled in the art. Suitable polystyrene include, for example, but are not limited to, oriented polystyrene (OPS) film and resins, *i*.*e*., polystyrene (PS), syndiotactic polystyrene (SPS), acrylonitrile-butadiene-styrene (ABS), styrene-acrylonitrile (SAN), ethylene/styrene copolymers, styrene/acrylic copolymers, styrene block copolymers (SBC), and the like. Exemplary of commercially available polystyrenes suitable for use in the present invention include, but are not limited to, **POLYSTYRENE**® **535** having a tensile modulus of 430,000, a flexural modulus of 450,000 which is supplied by Total Petrochemicals USA, Inc., Houston, Texas, U.S.A.

As used herein, the phrase "unplasticized polyvinyl chloride" refers to polymers and copolymers of vinyl chloride which is void of a polyvinyl chloride plasticizing agent including phthalates, phosphates, sebacates and fatty acid. A plasticizing agent as discussed herein refers to a chemical substance which is incorporated into a polymeric material to make it softer and more flexible.

As used herein, the terms "comprises", "comprising" and grammatical variations thereof are to be taken to specify the presence of stated features, integers, steps or components or groups thereof, but do not preclude the presence or addition of one or more other features, integers, steps, components or groups thereof.

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete and will fully convey the scope of the invention to those skilled in the art. Like numbers refer to like elements throughout.

### EXAMPLES

### EXAMPLE 1

It is to be understood, the present invention is not restricted to the following examples within the scope of the invention.

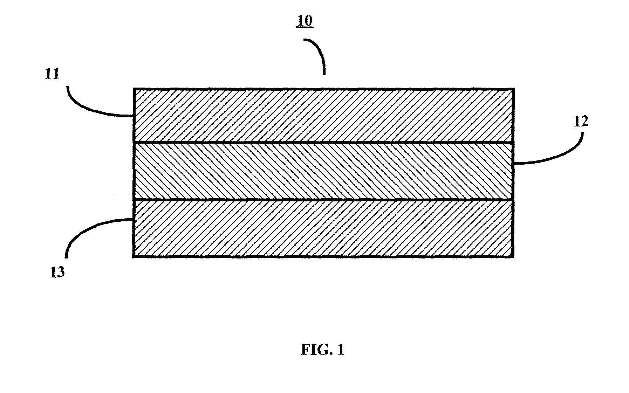

Example 1 is illustrated in **FIG. 1** as film **10** which represents one example of a three-layer embodiment of the present invention. Film **10** is depicted having a first layer **11,** a second layer **12** positioned between first layers **11** and third layer **13.** First layer **11,** second layer **12** and third layer **13** may each comprise materials as outlined hereinabove. First layer **11** may comprise polyethylene terephthalate copolymer (PET) and polyethylene phthalate additives. The polyethylene terephthalate may be a copolymer having a glass transition temperature of 78° C., a reported crystalline density of about 1.27 g/cm³, an inherent viscosity of 0.80, a 45° gloss of 108 Hunter Units (HU) which is available under the trademark **EASTAR™ Copolyester 6763** from Eastman Chemical Company, Kingsport, Tennessee, U.S.A. Alternatively, first layer **11** may comprise a polymer or copolymer having a glass transition temperature of greater than 50° C. which may include polyethylene terephthalate copolymer having a glass transition temperature of 51° C., reported crystalline density of about 1.33 g/cm³, which is available under the trademark **EASTOBOND^{™} Copolyester 19412** from Eastman Chemical Company, Kingsport, Tennessee, U.S.A. As depicted, first layer **11** is an exterior-film layer. Second layer **12** may comprise an adhesive material (tie) or an oxygen barrier material. One example of a suitable oxygen barrier material is ethylene/vinyl alcohol copolymer (EVOH) having a 38 mol% ethylene content, a reported density of 1.17 g/cm³, a melting point of between 172-173° C., such as that sold under the trademark **SOARNOL^{™} ET3803** which is available from the Nippon Synthetic Chemical Industry Company, Ltd. (Nippon Gohsei), Osaka, Japan and **EVAL^{™} H171** which is available from Kuraray Company, Ltd., Osaka, Japan. Another example of a suitable oxygen barrier material is an aromatic polyamide, such as, for example, nylon MXD6 (poly-m-xylylene adipamide) which has a glass transition temperature of 85° C., a melting point of 237° C., a density of 1.22 g/cm³ and is commercially available from Mitsubishi Gas Chemical Company, Inc., Tokyo, Japan. Preferably, third layer **13** comprises at least 30% by weight of a polymer or copolymer having a glass transition temperature of greater than 50° C., such as a copolymer of polyethylene terephthalate and ethylene glycol (PETG) having a glass transition temperature of 78° C., a reported crystalline density of about 1.4 g/cm³, an intrinsic viscosity of 0.80, which is available under the trademark **VORIDIAN^{™} 9921** from Eastman Chemical Company, Kingsport, Tennessee, U.S.A. Third layer **13** may be either an interior-film layer or an exterior-film layer. Film **10** may have an average gauge (thickness) of between 0.5-15 mil, preferably, 0.5-10 mil and more preferably, 0.7-5 mil.

### EXAMPLES 2-4

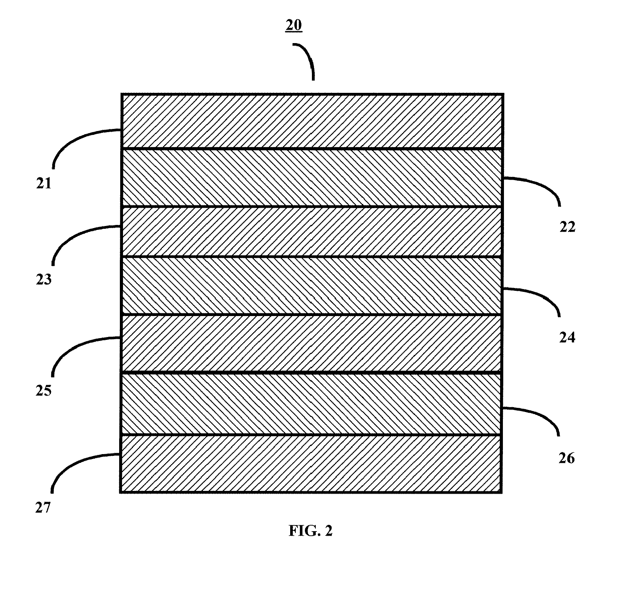

Examples 2-4 may each be illustrated in **FIG. 2** as film **20** and represent an example of a seven-layer embodiment of the present invention. Film **20** is depicted having a first layer **21,** a second layer **22,** a third layer **23,** fourth layer **24,** a fifth layer **25,** a sixth layer **26** and a seventh layer **27.** Also depicted in Film **20** has a layer arrangement where first layer 21 is an exterior-film layer, second layer **22** is in direct contact with and bond to both first layer **21** and third layer **23,** third layer **23** is in direct contact with and bond to both second layer **22** and fourth layer **24,** fourth layer **24** is in direct contact with and bond to both third layer **23** and fifth layer **25,** and seventh layer **27** is an exterior-film layer. In Example 2, first layer **21** comprised polyethylene terephthalate copolymer (PET) having a glass transition temperature of 51° C. as described for first layer **11** of film **10** (see **FIG. 1**). Layers **22** and 26 each included an adhesive (tie) material comprising 60% (by weight relative to the total weight of the second layer) of ethylene/methacrylate copolymer (EMA) having methyl acrylate content of 22%, a density of 0.948 g/cm³, a melt index of 2.0 g/10 min., being available under the product name **EMAC** + **SP1330^{™}** from Eastman Chemical Company, Kingsport, Tennessee, U.S.A., 10% (by weight relative to the total weight of the second layer) of anhydride-modified linear low density polyethylene (Mod.-LLDPE) having a density of 0.91 g/ cm³, melt flow index of 2.7 g/10 minutes, a melting point of 115° C., a Vicat Softening point of 103° C. and sold under the trademark **BYNEL® 41E710** which is available from E.I. de Pont de Nemours and Company, Wilmington, Delaware, U.S.A., and 30% (by weight relative to the total weight of the second layer) polyethylene was having a density of 0.918 g/cm³, a melt index of 1.0 g/10 min., and a melting point of 120° C., sold under the product name **ESCORENE LL 1001^{™}** and obtained from ExxonMobil Chemical Company of Houston, Texas, U.S.A. Third layer **23** included a nylon blend of 85% (by weight) nylon 6 having a density of 1.12 g/cm³, a melting point of a 220° C., a recrystallization temperature (as measured by deferential scanning calorimetry (DSC)) of 176° C., was available under the trademark **ULTRAMID^{™} B36** from BASF Corporation, Mount Olive, New Jersey, U.S.A.; and 15% (by weight) an aromatic nylon having a density of 1.19 g/cm³, a glass transition temperature of 127° C., a heat deflection temperature at 66 psi of 126° C., and was sold under the trademark **DUPONT SELAR**® **PA 3426** by E.I. de Pont de Nemours and Company, Wilmington, Delaware, U.S.A. **DUPONT SELAR**® **PA 3426** is an aromatic polyamide, nylon 6I/6T, which is manufactured from the condensation of hexamethylenediamine, terephthalic acid, and isophthalic acid such that 65-80% of the polymer repeating unit is derived from hexamethylene isophthalamide. Fourth layer **24** included a barrier layer material comprising ethylene/ vinyl alcohol copolymer (EVOH) having a 38 mol% ethylene content, a reported density of 1.17 g/cm³, a melting point of between 172-173° C., such as that sold under the trademark **SOARNOL^{™} ET3803** which is available from the Nippon Synthetic Chemical Industry Company, Ltd. (Nippon Gohsei), Osaka, Japan and **EVAL^{™} H171** which is available from Kuraray Company, Ltd., Osaka, Japan. Fifth layer **25** comprised 100% (by weight) of aromatic polyamide, nylon 6I/6T, **DUPONT SELAR**® **PA 3426** from E.I. de Pont de Nemours and Company, Wilmington, Delaware, U.S.A. The seventh layer **27** included a sealant material of a partial sodium salt of ethylene methacrylic acid copolymers (Ionomer) having a density of 0.940 g/ cm³, a melt flow index at 190° C. of 1.30 g/10 min, a Vicat softening point of 165° F. (73.9° C.), and was available under the trademark **SURLYN**® **1601** from E.I. de Pont de Nemours and Company, Wilmington, Delaware U.S.A. Film **20** had a total thickness of about 6 mil.

In Example 3, first layer **21** comprised 94.50% (by weight relative to the total weight of the first layer) of polyethylene terephthalate copolymer (PET) and 7.50% (by weight relative to the total weight of the first layer) of polyethylene terephthalate processing additives. The polyethylene terephthalate copolymer (PET) had a density of 1.4 g/cm³, a melting point of 240° C., a glass transition temperature of 78° C., and is available under the product name **VORIDIAN PET 9921^{™}** from Eastman Chemical Company (Voridian Division), Kingsport, Tennessee, U.S.A. Second layer **22** comprised an adhesive (tie) material of a blend of 60% (by weight relative to the total weight of the second layer) of ethylene/methacrylate copolymer (EMA) having methyl acrylate content of 22%, a density of 0.948 g/cm³, a melt index of 2.0 g/10 min, being available under the product name **EMAC + SP1330^{™} SPECIALTY POLYMER** from Eastman Chemical Company, Kingsport, Tennessee, U.S.A., 10% (by weight relative to the total weight of the second layer) of anhydride-modified linear low density polyethylene (Mod.-LLDPE) having a density of 0.91 g/ cm³, melt flow index of 2.7 g/10 minutes, a melting point of 115° C., a Vicat Softening point of 103° C. and sold under the trademark **BYNEL® 41E710** which is available from E.I. de Pont de Nemours and Company, Wilmington, Delaware, U.S.A. and 30% (by weight relative to the total weight of the second layer) polyethylene was having a density of 0.918 g/cm³, a melt index of 1.0 g/10 min, and a melting point of 120° C., sold under the product name **ESCORENE LL 1001** and obtainable from ExxonMobil Chemical Company of Houston, Texas, U.S.A. Layer **23** was a polyamide blend (nylon blend) of 85% (by weight relative to the total weight of the third layer) nylon 6 having a density of 1.12 g/cm³, a melting point of a 220° C., a recrystallization temperature (as measured by deferential scanning calorimetry (DSC)) of 176° C., being available under the trademark **ULTRAMID^{™} B36** from BASF Corporation, Mount Olive, New Jersey, U.S.A.; and 15% (by weight relative to the total weight of the third layer) nylon 6I/6T having a density of 1.19 g/cm³, a glass transition temperature of 127° C., a heat deflection temperature at 66 psi of 126° C., and is sold under the trademark **SELAR**® **PA 3426** by E.I. de Pont de Nemours and Company, Wilmington, Delaware, U.S.A. Layer **24** included an oxygen barrier material of 100% (by weight relative to the total weight of the fourth layer) of ethylene/ vinyl alcohol copolymer (EVOH) having a reported bulk density of 0.64-0.74 g/cm³, a relative density of 1.13-1.22 g/cm³, a melting point of 164-188° C., such as that sold under the trademark **SOARNOL^{™} ET3803** and is available from the Nippon Synthetic Chemical Industry Company, Ltd. (Nippon Gohsei), Osaka, Japan. Layer **25** comprised 100% (by weight relative to the total weight of the fifth layer) of an aromatic polyamide, nylon 6I/6T, having a density of 1.19 g/cm³, a glass transition temperature of 127° C., a heat deflection temperature at 66 psi of 126° C., and is sold under the trademark **SELAR**® **PA 3426** by E.I. de Pont de Nemours and Company, Wilmington, Delaware, U.S.A. Layer **26** was an adhesive (tie) material which included an anhydride-modified linear low-density polyethylene (Mod.-LLDPE) having a density of 0.91 g/ cm³, melt flow index of 2.7 g/10 minutes, a melting point of 115° C., a Vicat Softening point of 103° C., which is available under the trademark **BYNEL® 41E710** from E.I. de Pont de Nemours and Company, Wilmington, Delaware, U.S.A. Layer 27 included a sealant material of 98.20% (by weight relative to the total weight of the seventh layer) of ultra low-density polyethylene and 1.80% (by weight relative to the total weight of the seventh layer) processing additives. The ultra low-density polyethylene (ULDPE) had a melt index of 1 g/10 min, a density of 0.912 g/cm³, a melting point of 123° C., a Vicat Softening point of 93° C., which is sold under the trademark **ATTANE**® **4201G** by The Dow Chemical Company, Midland, Michigan, U.S.A. Example 3 had a total thickness of about 3.5 mil.

Example 4 represents still another example of a seven-layer embodiment of the present invention as depicted in film **20** (see **FIG. 2**). In Example 4, first layer **21** and second layer **22** had identical chemical compositions as those of Example 3, respectively. Third layer **23** comprised 100% (by weight relative to the total weight of the third layer) of ultra low-density polyethylene (ULDPE) had a melt index of 1 g/10 min, a density of 0.912 g/cm³, a melting point of 123° C., a Vicat Softening point of 93° C., which is sold under the trademark **ATTANE 4201G** by The Dow Chemical Company, Midland, Michigan, U.S.A. The fourth layer **24** included an adhesive (tie) material of anhydride-modified linear low density polyethylene (Mod.-LLDPE) and sold under the trademark **BYNEL® 41E710** which is available from E.I. de Pont de Nemours and Company, Wilmington, DE, U.S.A. Fifth layer **25** comprised 100% (by weight relative to the total weight of the fifth layer) a blend of an aromatic polyamide, nylon MXD6 (poly-m-xylylene adipamide) and nanoclay. The MXD6/clay mixture was sold under the trademark **IMPERM**® **M10** by AMCOL International Corporation (Nanocor), Arlington Heights, Illinois, U.S.A. The MXD6/clay mixture may comprise a blend of MXD6 (poly-m-xylylene adipamide) and nanoclay sold under the trademark **IMPERM 107** which includes MXD6 having a glass transition temperature of 85° C., a melting point of about 237° C., and a density of 1.18-1.21 g/cm³ and is available from Mitsubishi Gas Chemical Company, Inc., Tokyo, Japan. Alternatively, fifth layer **25** may include 100% (by weight relative to the total weight of the fifth layer) of MXD6 (poly-m-xylylene adipamide) having a glass transition temperature of 75° C., a melting point of about 240° C., and a melt flow index of 2 g/10 min which is sold under the product name **NYLON-MXD6 6007** and is available from Mitsubishi Gas Chemical Company, Inc., Tokyo, Japan. Sixth layer **26** had a chemical composition which was identical to fourth layer **24** of Example 4. The seventh layer **27** comprised 97.00% (by weight relative to the total weight of the seventh layer) of a sealant material of an ethylene/vinyl acetate copolymer (EVA) and 3.00% (by weight relative to the total weight of the seventh layer) processing additives. The ethylene/vinyl acetate copolymer had a 5.5% (by weight) vinyl acetate content, a melt index of 2.0 g/10 min, a density of 0.924 g/cm³, a melting point of 102° C., a Vicat Softening point of 83° C., which is sold under the product name **ESCORENE EVA LD 306.38** by ExxonMobil Chemical Company of Houston, Texas, U.S.A. Example 4 had a total thickness of about 6.0 mil.

### COMPARATIVE EXAMPLE

### EXAMPLE 5

The Example 5 represents a comparative seven-layer film which may be illustrated as film **20** (see **FIG. 2**). In Example 5, layers **21-24** and **26-27** were formed having identical layer compositions as layers **21-24** and **26-27** of Example 3, respectively. Fifth layer **25** was identical in composition as third layer **23.** Example 5 had a total thickness of about 6.0 mil.

Table 1 illustrates the layer arrangement, layer composition and layer thicknesses (% thickness relative to the total thickness of the film) for Examples 2-5.

| TABLE 1 | | | | | | | |
|---|---|---|---|---|---|---|---|
| Layer Composition and %Thickness | | | | | | | |
| Film Structure | 21 | 22 | 23 | 24 | 25 | 26 | 27 |
| Example 2 | PET 20.0% | EMA + Mod.-LLDPE Blend 13.0% | Nylon 6 + Nylon 6I/6T Blend 14.0% | EVOH 9.0% | Nylon 6I/6T 14.0% | Mod.-LLDPE Blend 12.0% | lonomer 18.0% |
| | | | | | | | |
| Example 3 | PET 15.0% | EMA + Mod.-LLDPE Blend 11.0% | Nylon 6 + Nylon 6I/6T Blend 9.0% | EVOH 9.0% | Nylon 6I/6T 9.0% | Mod.-LLDPE 21.0% | ULDPE 26.0% |
| | | | | | | | |
| Example 4 | PET 19.7% | EMA + Mod.-LLDPE Blend 9.7% | ULDPE 18.5% | Mod.-LLDPE 9.0% | Nylon MXD-6 12.2% | Mod.-LLDPE 9.0% | EMA 22.0% |
| | | | | | | | |
| Comparative Example 5 | PET 15.0% | EMA + Mod.-LLDPE Blend 11.0% | Nylon 6 + Nylon 6I/6T Blend 8.1% | EVOH 9.0% | Nylon 6 + Nylon 6I/6T Blend 8.1% | Mod.-LLDPE 21.0% | ULDPE 27.8% |

Table 2 illustrates the curl values for film **20** as described in Example 4 and Comparative Example 5. Curl values were determined in accordance with the Standard Test Method for Curl described herein.

| TABLE 2 | | | |
|---|---|---|---|
| Curl Angle (Degrees) | | | |
| Example 4 | | Comparative Example 5 | |
| Machine Direction | Transverse Direction | Machine Direction | Transverse Direction |
| 65 | 55 | 180 | 120 |
| 75 | 65 | 200 | 115 |
| 70 | 60 | 210 | 110 |
| 70 | 75 | 200 | 135 |
| 70 | 70 | 200 | 135 |
| 80 | 60 | 210 | 125 |
| | | | |
| Ave. = 72 | Ave. = 64 | Ave. = 200 | Ave. = 123 |

### EXAMPLES 6-8

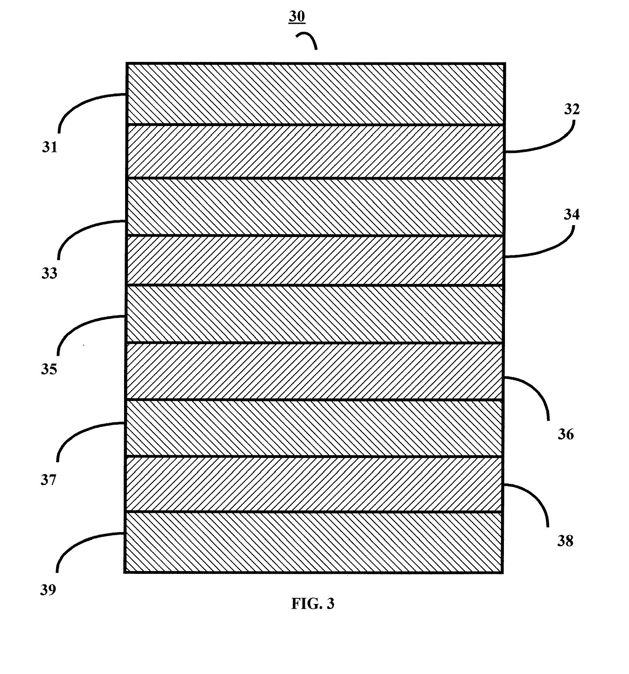

Examples 6-8 may each be illustrated in **FIG. 3** as film **30** and represent examples of a nine-layer embodiment of the present invention. Film **30** is depicted having a first layer **31,** a second layer **32,** a third layer **33,** fourth layer **34,** a fifth layer **35,** a sixth layer **36,** a seventh layer **37,** a eighth layer **38** and a ninth layer **39.** Also depicted in Film **30** is a layer arrangement where first layer **31** is an exterior-film layer, second layer **32** is in direct contact with and bond to both first layer **31** and third layer **33,** third layer **33** is in direct contact with and bond to both second layer **32** and fourth layer **34,** fourth layer **34** is in direct contact with and bond to both third layer **33** and fifth layer **35,** fifth layer **35** is in direct contact with and bond to both fourth layer **34** and sixth layer **36,** sixth layer **36** is in direct contact with and bond to both fifth layer **35** and seventh layer **37,** eighth layer **38** is in direct contact with and bond to both seventh layer **37** and ninth layer **39,** and ninth layer **39** is an exterior-film layer.

Table 3 illustrates other generic nine-layer arrangements and layer compositions for Examples 6-8 as contemplated in the present invention. It is understood that the layer compositions indicated in Table 3, below, represent materials which are similar to those described in more detail in Examples 1-6, hereinabove.

| TABLE 3 | | | | | | | | | |
|---|---|---|---|---|---|---|---|---|---|
| Layer Composition | | | | | | | | | |
| Film Structure | 31 | 32 | 33 | 34 | 35 | 36 | 37 | 38 | 39 |
| Example 6 | PET | Tie | Nylon Blend | EVOH (or Tie) | Nylon Blend | Tie | PET | Tie | Sealant |
| | | | | | | | | | |
| Example 7 | PET | Tie | PET | Tie | EVOH | Tie | PET | Tie | Sealant |
| | | | | | | | | | |
| Example 8 | Nylon Blend | Tie | PET | Tie | EVOH | Tie | PET | Tie | Sealant |

Unless otherwise noted, the physical properties and performance characteristics reported herein were measured by test procedures similar to the following methods. The following ASTM test procedures are incorporated herein by reference in their entireties:

| | |
|---|---|
| Density | ASTM D-1505 |
| Glass Transition Temperature | ASTM D-3417 |
| Heat Shrinkage | ASTM D-2732-96 |
| Melt Index | ASTM D-1238 |
| Melting Point | ASTM D-3417 |
| Vicat Softening Point | ASTM D-1525 |

While various embodiments of the disclosure are herein described, it is envisioned that those skilled in the art may devise various modifications and equivalents without departing from the spirit and scope of the disclosure. The disclosure is not intended to be limited by the foregoing detailed description.

## Claims

1. A flexible curl-resistant film for packaging applications comprising:
(a) a plurality of thermoplastic polymeric layers comprising at least a first layer, a second layer and a third layer;
(b) wherein said first layer comprises a polymer or copolymer having a glass transition temperature of greater than 50° C. as measured in accordance with ASTM D-3417 test method;
(c) wherein said second layer comprises an oxygen barrier material or an adhesive material; wherein said second layer is disposed between said first and third polymer layers;
(d) wherein said third layer comprises at least 30% by weight relative to the total weight of said layer of a polymer or copolymer having a glass transition temperature of greater than 50° C. as measured in accordance with ASTM D-3417 test method; and
(e) wherein said film has a heat shrinkage value of less than 5% in both the machine and transverse directions at 90° C. as measured in accordance with ASTM D-2732-96 test method.

2. A film as claimed in claim 1, wherein said plurality of thermoplastic polymer layers are coextruded.

3. A film as claimed in claim 2, wherein said plurality of coextruded thermoplastic polymer layers is formed by either slot cast or blown film coextrusion.

4. A film as claimed in any preceding claim, wherein said film has a degree of vertical curvature of less than 90° in the negative or positive direction relative to the plane of said film as measured in accordance with the Standard Test Method for Curl when said film is in a lay flat condition.

5. A film as claimed in any preceding claim, wherein said first and third layers each comprise a material selected from aromatic polyamide, aromatic polyester, cyclic olefin copolymer, polyamideimide, polycarbonate, polyetheretherketone, polyetherimide, polyethersulphone, polymethyl methacrylate, polyoxymethylene, polyphenylene sulphide, polystyrene, unplasticized polyvinyl chloride or blends thereof.

6. A film as claimed in claim 5, wherein said aromatic polyester comprises a homopolymer or copolymer selected from polybutylene isophthalate, polybutylene terephthalate, polyethylene isophthalate, polyethylene isophthalate derivate, polyethylene naphthalate, polyethylene phthalate, polyethylene terephthalate, polyethylene terephthalate derivate, polypropylene terephthalate or blends thereof.

7. A film as claimed in claim 5 or claim 6, wherein said aromatic polyamide comprises a material selected from nylon 4,I, nylon 6,I, nylon 6,6/6I copolymer, nylon 6,6/6T copolymer, nylon MXD6 (poly-m-xylylene adipamide), poly-p-xylylene adipamide, nylon 6I/6T copolymer, nylon 6T/6I copolymer, nylon MXDI, nylon 6/MXDT/I copolymer, nylon 6T (polyhexamethylene terephthalamide), nylon 12T (polydodecamethylene terephthalamide), nylon 66T, nylon 6-3-T (poly(trimethyl hexamethylene terephthalamide) or blends thereof.

8. A film as claimed in any preceding claim, wherein said first layer comprises at least 30% by weight relative to the total weight of said layer of said polymer or copolymer having a glass transition temperature of greater than 50° C. as measured in accordance with ASTM D-3417 test method.

9. A film as claimed in any preceding claim, wherein said polymer or copolymer having a glass transition temperature of greater than 50° C. as measured in accordance with ASTM D-3417 test method of said first layer is crystalline.

10. A film as claimed in any preceding claim, wherein said first layer comprises a polymer or copolymer having a glass transition temperature of at least 60° C. as measured in accordance with ASTM D-3417 test method, preferably at least 80° C. as measured in accordance with ASTM D-3417 test method, more preferably at least 100° C. as measured in accordance with ASTM D-3417 test method.

11. A film as claimed in any preceding claim, wherein said third layer comprises a polymer or copolymer having a glass transition temperature of at least 80° C. as measured in accordance with ASTM D-3417 test method, preferably at least 100° C. as measured in accordance with ASTM D-3417 test method.

12. A film as claimed in any preceding claim, wherein said film has an oxygen transmission rate of between 0-2.0 cc/100 in²/24 hours at 23° C. and 0% R.H. as measured in accordance to ASTM D-3985 test method.

13. A film as claimed in any preceding claim, wherein said oxygen barrier material is selected from ethylene/vinyl alcohol copolymer, aromatic polyamide or blends thereof.

14. A film as claimed in claim 13, wherein said oxygen barrier material comprises a crystalline polymer or copolymer.

15. A film as claimed in any preceding claim, wherein said first layer is positioned as an exterior-film layer.

16. A film as claimed in any preceding claim, wherein said third layer is void of aliphatic polyamide and/or ethylene/vinyl alcohol copolymer.

17. A film as claimed in any preceding claim, wherein said plurality of thermoplastic polymeric layers further comprises a fourth layer of a material selected from aromatic polyester, polyamide or blends thereof; wherein said fourth layer is disposed between said first and second layers.

18. A film as claimed in claim 17, wherein said plurality of thermoplastic polymeric layers further comprises a fifth layer of a sealant material; wherein said fifth layer is positioned as an exterior-film layer.

19. A film as claimed in any preceding claim, wherein said film is adapted to form a curl-resistant package.
